# EUROPEAN PATENT APPLICATION

(11) **EP 4 485 575 A1**
(43) Date of publication of application: **01.01.2025**
(21) Application number: 23759994.9
(22) Date of filing: 21.02.2023
(51) Int. Cl.: H01M 4/525, H01M 4/36, H01M 4/505

(54) **POSITIVE ELECTRODE ACTIVE MATERIAL FOR NONAQUEOUS ELECTROLYTE SECONDARY BATTERY, AND NONAQUEOUS ELECTROLYTE SECONDARY BATTERY**

(30) Priority: 25.02.2022 JP 2022028418
(71) Applicant: Panasonic Energy Co., Ltd., Osaka 570-8511 (JP)
(72) Inventor: SUITA Kazuki, Kadoma-shi, Osaka 571-0057 (JP); KANAI Toshinobu, Kadoma-shi, Osaka 571-0057 (JP); TOCHIO Takaya, Kadoma-shi, Osaka 571-0057 (JP)
(74) Representative: Novagraaf International SA
(86) International application number: PCT/JP2023/006302
(87) International publication number: WO 2023/162993

(57) **Abstract**

This positive electrode active material for a nonaqueous electrolyte secondary battery is characterized by having a mixture of a first positive electrode active material and a second positive electrode active material, wherein: the first positive electrode active material is a Ni-containing lithium composite oxide, in which the ratio (A1) of the number of moles of Ni to the total number of moles of metal elements other than Li is at least 80%, and the ratio (A2) of the number of moles of Mn to the total number of moles of metal elements other than Li is at most 1%; the second positive electrode active material is a Ni-containing lithium composite oxide, in which the ratio (B 1) of the number of moles of Ni to the total number of moles of metal elements other than Li is a ± 3% range of the ratio (A1), and the ratio (B2) of the number of moles of Mn to the total number of moles of metal elements other than Li is at least 3%; and the peak of NiO is observed in the X-ray diffraction measurement of the mixture.

## Description

### TECHNICAL FIELD

The present disclosure relates to a positive electrode active material for a non-aqueous electrolyte secondary battery, and the non-aqueous electrolyte secondary battery.

### BACKGROUND

In recent years, as a secondary battery having a high output and a high energy density, a non-aqueous electrolyte secondary battery that includes a positive electrode, a negative electrode, and a non-aqueous electrolyte and performs charging and discharging by moving lithium ions and the like between the positive electrode and the negative electrode has been widely used.

For example, Patent Literature 1 discloses a non-aqueous electrolyte secondary battery using, as a positive electrode active material, a lithium composite oxide composed of a particulate lithium composite oxide containing at least lithium, nickel, cobalt, manganese, and tungsten as constituent elements, and a layer of nickel oxide formed on the surface of the lithium composite oxide.

### CITATION LIST

### PATENT LITERATURE

Patent Literature 1: JP 2016-110924 A

### SUMMARY

Meanwhile, with an increase in capacity of a non-aqueous electrolyte secondary battery, an increase in capacity of a positive electrode active material is required. As a method of increasing the capacity of the positive electrode active material, it is conceivable to use a Ni-containing lithium composite oxide in which a ratio of the number of moles of Ni to the total number of moles of metal elements excluding lithium is increased. However, when the ratio of Ni increases, charging-and-discharging cycle characteristics deteriorate, and thus it is difficult to achieve both an increase in capacity and suppression of deterioration in charging-and-discharging cycle characteristics.

Therefore, an object of the present disclosure is to provide a positive electrode active material for a non-aqueous electrolyte secondary battery capable of achieving both high capacity of the battery and suppression of deterioration in charging-and-discharging cycle characteristics, and the non-aqueous electrolyte secondary battery including the positive electrode active material for the non-aqueous electrolyte secondary battery.

A positive electrode active material for a non-aqueous electrolyte secondary battery according to one aspect of the present disclosure includes a mixture of a first positive electrode active material and a second positive electrode active material, in which the first positive electrode active material is a Ni-containing lithium composite oxide, in which a ratio (A1) of the number of moles of Ni to the total number of moles of metal elements excluding Li is greater than or equal to 80%, and a ratio (A2) of the number of moles of Mn to the total number of moles of the metal elements excluding Li is less than or equal to 1%, the second positive electrode active material is the Ni-containing lithium composite oxide, in which a ratio (B1) of the number of moles of Ni to the total number of moles of the metal elements excluding Li is in a range of ±3% of the ratio (A1), and a ratio (B2) of the number of moles of Mn to the total number of moles of the metal elements excluding Li is greater than or equal to 3%, and a peak of NiO is observed in X-ray diffraction measurement of the mixture.

A non-aqueous electrolyte secondary battery according to one aspect of the present disclosure includes a positive electrode, a negative electrode, and a non-aqueous electrolyte, in which the positive electrode contains the positive electrode active material for the non-aqueous electrolyte secondary battery.

According to one aspect of the present disclosure, it is possible to provide a positive electrode active material for a non-aqueous electrolyte secondary battery capable of achieving both an increase in capacity of the battery and suppression of deterioration in charging-and-discharging cycle characteristics, and the non-aqueous electrolyte secondary battery including the positive electrode active material for the non-aqueous electrolyte secondary battery.

### BRIEF DESCRIPTION OF DRAWINGS

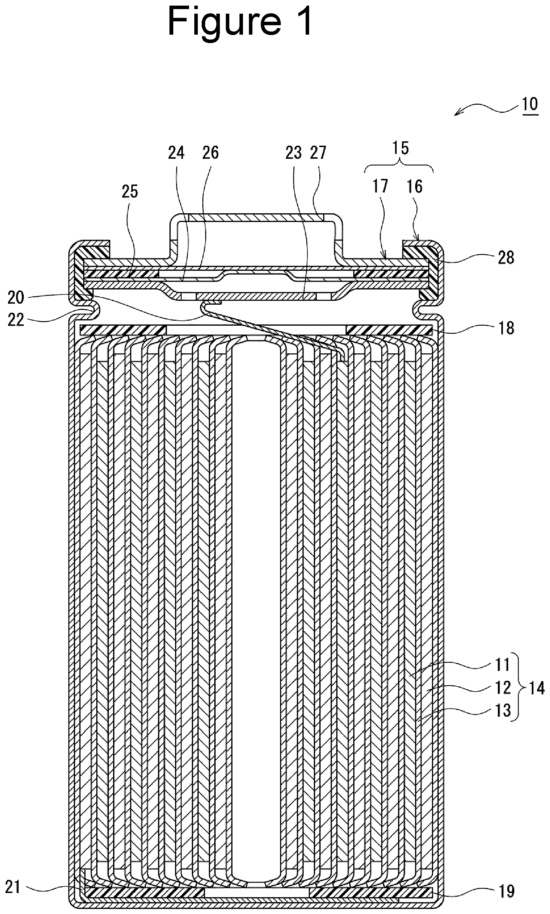

FIG. 1 is a sectional view of a non-aqueous electrolyte secondary battery as an example of an embodiment.

### DESCRIPTION OF EMBODIMENTS

Hereinafter, an example of an embodiment will be described in detail. The drawings referred to in the description of embodiments are schematically illustrated, and dimensional ratios and the like of components drawn in the drawings may be different from actual ones.

FIG. 1 is a schematic cross-sectional view of a secondary battery as an example of an embodiment. A secondary battery 10 shown in FIG. 1 includes a winding-type electrode assembly 14 in which a positive electrode 11 and a negative electrode 12 are wound with a separator 13 interposed therebetween, a non-aqueous electrolyte, insulating plates 18 and 19 respectively disposed on the upper and lower sides of the electrode assembly 14, and a battery case 15 housing the above-described members. The battery case 15 includes a bottomed cylindrical case body 16 and a sealing assembly 17 that seals an opening of the case body 16. Note that, instead of the winding-type electrode assembly 14, an electrode assembly having another form, such as a stacked electrode assembly in which positive electrodes and negative electrodes are alternately stacked with separators interposed therebetween, may be applied. Examples of the battery case 15 include metal cases having a cylindrical shape, a square shape, a coin shape, a button shape, or the like, and resin cases (so-called laminated type) formed by lamination with a resin sheet.

The non-aqueous electrolyte includes, for example, a non-aqueous solvent and electrolyte salt dissolved in the non-aqueous solvent. Examples of the non-aqueous solvent include esters, ethers, nitriles, amides, and a mixture of two or more thereof. The non-aqueous solvent may contain a halogen-substituted product in which at least some hydrogen in a solvent described above is substituted with a halogen atom such as fluorine. Examples of the electrolyte salt include lithium salts such as LiPF₆. The electrolyte is not limited to a liquid electrolyte, and may be a solid electrolyte in which a gel polymer or the like is used.

The case body 16 is, for example, a bottomed cylindrical metal container. A gasket 28 is provided between the case body 16 and the sealing assembly 17 to ensure the sealing performance inside the battery. The case body 16 has a projecting portion 22 in which, for example, a part of the side part of the case body 16 protrudes inwards to support the sealing assembly 17. The projecting portion 22 is preferably formed in an annular shape in the circumferential direction of the case body 16, and supports the sealing assembly 17 on the upper surface thereof.

The sealing assembly 17 has a structure in which a filter 23, a lower vent member 24, an insulating member 25, an upper vent member 26, and a cap 27 are sequentially stacked from the electrode assembly 14 side. Each member included in the sealing assembly 17 has, for example, a disk shape or a ring shape, and the members excluding the insulating member 25 are electrically connected to each other. The lower vent member 24 and the upper vent member 26 are connected to each other at their central parts, and the insulating member 25 is interposed between the peripheral edge parts of the lower vent member 24 and the upper vent member 26. When the internal pressure of the secondary battery 10 increases due to heat generated by an internal short circuit or the like, for example, the lower vent member 24 is deformed so as to push the upper vent member 26 up toward the cap 27 side and breaks, and thus the current pathway between the lower vent member 24 and the upper vent member 26 is cut off. When the internal pressure further increases, the upper vent member 26 is broken, and gas is discharged from an opening of the cap 27.

In the secondary battery 10 shown in FIG. 1, a positive electrode lead 20 attached to the positive electrode 11 extends to the sealing assembly 17 side through a through-hole of the insulating plate 18, and a negative electrode lead 21 attached to the negative electrode 12 extends to the bottom side of the case body 16 through the outside of the insulating plate 19. The positive electrode lead 20 is connected to the lower surface of the filter 23, which is the bottom plate of the sealing assembly 17, by welding or the like, and the cap 27, which is electrically connected to the filter 23 and is the top plate of the sealing assembly 17, serves as a positive electrode terminal. The negative electrode lead 21 is connected to the bottom inner surface of the case body 16 by welding or the like, and the case body 16 serves as a negative electrode terminal.

Hereinafter, the positive electrode 11, the negative electrode 12, and the separator 13 will be described in detail.

### [Positive Electrode]

The positive electrode 11 includes a positive electrode current collector and a positive electrode mixture layer disposed on the positive electrode current collector. Note that the positive electrode mixture layer is desirably disposed on both surfaces of the positive electrode current collector.

As the positive electrode current collector, a foil of a metal stable in a potential range of the positive electrode, such as aluminum or an aluminum alloy, a film in which the metal is disposed on a surface layer, or the like can be used. The positive electrode current collector has a thickness of, for example, about greater than or equal to 10 µm and less than or equal to 100 µm.

The positive electrode mixture layer contains a positive electrode active material. The positive electrode active material contains a mixture of a first positive electrode active material and a second positive electrode active material. In addition, it is preferable that the positive electrode mixture layer contains a binding agent from the viewpoint of binding the positive electrode active materials to each other so as to secure the mechanical strength of the positive electrode mixture layer. In addition, it is preferable that the positive electrode mixture layer contains a conductive agent from the viewpoint of improving the conductivity of the layer.

The positive electrode can be produced, for example, by preparing a positive electrode mixture slurry containing the positive electrode active material, the binding agent, the conductive agent, and the like, applying the positive electrode mixture slurry onto a positive electrode current collector, drying a coating film, and then rolling the coating film.

The first positive electrode active material is a Ni-containing lithium composite oxide, a ratio (A1) of the number of moles of Ni to the total number of moles of metal elements excluding Li is greater than or equal to 80%, and a ratio (A2) of the number of moles of Mn to the total number of moles of the metal elements excluding Li is less than or equal to 1%. The ratio (A1) of the number of moles of Ni is preferably greater than or equal to 85% from the viewpoint of increasing the capacity of the battery. Further, the ratio (A2) of the number of moles of Mn may be 0%. In addition, the Ni-containing lithium composite oxide of the first positive electrode active material preferably contains Co from the viewpoint of suppressing deterioration in charging-and-discharging cycle characteristics, and in particular, a ratio (A3) of the number of moles of Co to the total number of moles of metal elements excluding Li is preferably greater than or equal to 3%. The upper limit of the ratio (A3) of the number of moles of Co may be, for example, less than or equal to 10%.

The Ni-containing lithium composite oxide of the first positive electrode active material is preferably, for example, a Ni-containing lithium composite oxide represented by the following general formula (1).

Li_{z}Ni_{1-x-y}CoₓM_{y}O₂ (1)

In the formula, x, y, and z preferably satisfy 0 < x ≤ 0.10, 0 < y ≤ 0.05, 0.85 ≤ 1-x-y ≤ 0.95, and 0.960 ≤ z ≤ 0.983. In the formula, M is preferably at least one element selected from a group consisting of Mn, Al, W, Nb, Mg, Ti, and Mo, and more preferably Al.

The second positive electrode active material is the Ni-containing lithium composite oxide, and a ratio (B 1) of the number of moles of Ni to the total number of moles of metal elements excluding Li is in the range of ±3% of the ratio (A1) of the number of moles of Ni to the total number of moles of metal elements excluding Li in the first positive electrode active material. For example, when the ratio (A1) of the number of moles of Ni in the first positive electrode active material is 90%, the ratio (B 1) of the number of moles of Ni in the second positive electrode active material is in the range of 87% to 93%. In addition, in the second positive electrode active material, a ratio (B2) of the number of moles of Mn to the total number of moles of metal elements excluding Li is greater than or equal to 3%, preferably greater than or equal to 3% and less than or equal to 10% from the viewpoint of suppressing deterioration in charging-and-discharging cycle characteristics. Further, in the second positive electrode active material, a ratio (B3) of the number of moles of Co to the total number of moles of metal elements excluding Li is preferably less than or equal to 1 mol%, and more preferably 0 mol%.

The Ni-containing lithium composite oxide of the second positive electrode active material is preferably, for example, a Ni-containing lithium composite oxide represented by the following general formula (2).

Li_{z}Ni_{1-x-y}MnₓM_{y}O₂ (2)

In the formula, x, y, and z preferably satisfy 0 < x ≤ 0.10, 0 < y ≤ 0.08, 0.82 ≤ 1-x-y ≤ 0.98, and 0.974 ≤ z ≤ 1.004. In the formula, M is preferably at least one element selected from a group consisting of Al, W, Nb, Mg, Ti, and Mo, and more preferably Al.

The composition of the Ni-containing lithium composite oxide is measured by inductively coupled plasma (ICP) emission spectroscopy.

When X-ray diffraction measurement is performed on the mixture of the first positive electrode active material and the second positive electrode active material, a peak of NiO is observed from the X-ray diffraction spectrum. In the X-ray diffraction measurement using CuKα rays, the peak of NiO is observed in the vicinity of 2θ = 43.0°. Here, the mixture is composed of the first positive electrode active material and the second positive electrode active material, and is not composed of a mixture of these positive electrode active materials and NiO powder. Therefore, the peak of NiO observed by X-ray diffraction measurement of the mixture is a peak derived from NiO formed in a crystal structure of at least one of the first positive electrode active material and the second positive electrode active material. In view of a method of producing the mixture of the first positive electrode active material and the second positive electrode active material described below, it is presumed that NiO is mainly formed in the crystal structure of the first positive electrode active material.

In the mixture in which the peak of NiO is observed by X-ray diffraction measurement, NiO is incorporated in the crystal structure, and Ni²⁺ is present in the crystal. Therefore, it is presumed that, when Li is desorbed from the positive electrode active material constituting the mixture, charge compensation is performed due to a change in the valence of Ni²⁺. This is considered to prevent release of O from the positive electrode active material at the time of charging the battery, so that destabilization of the crystal structure of the positive electrode active material is suppressed, and deterioration in charging-and-discharging cycle characteristics of the battery can be suppressed. In addition, since the first positive electrode active material and the second positive electrode active material constituting the mixture have a high ratio (A1, B1) of the number of moles of Ni to the total number of moles of metal elements excluding Li, the capacity of the battery is increased. Therefore, by using the mixture of the first positive electrode active material and the second positive electrode active material of the present embodiment as a positive electrode active material, it is possible to achieve both an increase in capacity of the battery and suppression of deterioration in charging-and-discharging cycle characteristics.

The measurement conditions of X-ray diffraction are described as follows.
Radiation source: Cu Kα1 (wavelength: 1.5418 Å)
Detector: PSD (LYNX EYE)
X-ray output: 40 kV × 40 mA
Goniometer radius: 250 mm
Operation axis: 2θ/θ
Measurement method: continuous
Counting unit: CPS
Scanning speed: 0.03°/sec
Start angle: 10°, End angle: 100°

A mass ratio of NiO contained in the mixture is preferably in a range which is greater than or equal to 0.4% and less than or equal to 0.8%. When the mass ratio of NiO is within the above range, deterioration in charging-and-discharging cycle characteristics may be further suppressed as compared with a case in which the mass ratio of NiO is out of the above range. The mass ratio of NiO contained in the mixture can be calculated from the following formula based on a peak intensity (cts) and a half width (deg) of a (104) plane of the mixture and a (200) plane of NiO obtained by X-ray diffraction measurement of the mixture. Mass ratio of NiO (%) = (peak intensity of NiO × half width of NiO)/(peak intensity of mixture × half width of mixture) ×100

The content of the second positive electrode active material is preferably greater than or equal to 1 mass% and less than or equal to 10 mass%, and more preferably greater than or equal to 2 mass% and less than or equal to 5 mass%, with respect to the mass of the first positive electrode active material. When the content of the second positive electrode active material is in the range which is greater than or equal to 1 mass% and less than or equal to 10 mass%, deterioration in charging-and-discharging cycle characteristics may be further suppressed as compared with a case in which the content exceeds 10 mass%. The content of the mixture of the first positive electrode active material and the second positive electrode active material contained in the positive electrode mixture layer is preferably greater than or equal to 80 mass%, and more preferably greater than or equal to 90 mass%, with respect to the total mass of the positive electrode mixture layer.

The average particle size of each of the first positive electrode active material and the second positive electrode active material is, for example, greater than or equal to 1 µm and less than or equal to 30 µm. Here, the average particle diameter is a volume average particle diameter measured by a laser diffraction method, and means a median diameter at which a volume integrated value is 50% in a particle diameter distribution.

An example of a method of producing the first positive electrode active material and the second positive electrode active material will be described.

A first precursor oxide for obtaining the first positive electrode active material and a second precursor oxide for obtaining the second positive electrode active material are prepared. The first precursor oxide is an oxide in which the ratio of the number of moles of Ni to the total number of moles of metal elements in the oxide is greater than or equal to 80%, and the ratio of the number of moles of Mn to the total number of moles of metal elements in the oxide is less than or equal to 1%. The first precursor oxide may contain Co, Al, or the like as necessary. The second precursor oxide is an oxide in which the ratio of the number of moles of Ni to the total number of moles of metal elements in the oxide is in the range of ±3% of the ratio of the number of moles of Ni to the total number of moles of metal elements in the first precursor oxide, and the ratio of the number of moles of Mn to the total number of moles of metal elements in the second precursor oxide is greater than or equal to 3%. The second precursor oxide may contain Al or the like as necessary. These precursor oxides can be produced by a known method, and can be obtained, for example, by firing a Ni-containing composite hydroxide obtained by a coprecipitation method at a predetermined temperature for a predetermined time.

Then, the first precursor oxide, the second precursor oxide, and a Li source such as lithium hydroxide or lithium carbonate are mixed, and the mixture thereof is fired under an oxygen atmosphere. As described above, since the increase in the amount of the second positive electrode active material affects the charging-and-discharging cycle characteristics of the battery, the mixing amount of the second precursor oxide is preferably greater than or equal to 1 mass% and less than or equal to 10 mass%, and more preferably greater than or equal to 2 mass% and less than or equal to 5 mass%, with respect to the mass of the first precursor oxide. The firing temperature of the mixture may be, for example, in the range of 600°C to 800°C. The firing time of the mixture may be, for example, in the range of 1 hour to 24 hours.

In this way, the mixture according to the present embodiment is obtained. The mechanism by which NiO is formed in the mixture is not sufficiently clear, but the following mechanism is presumed. Usually, Li is added in excess with respect to the metal amount of the precursor oxide in consideration of generation of a side reaction product of lithium and the like. Therefore, from the viewpoint of charge compensation, the Ni valence of the first positive electrode active material exceeds trivalence, whereas in the second positive electrode active material, due to the presence of Mn tetravalence, a part of Ni exists as divalence. However, during firing, in each of the first positive electrode active material and the second positive electrode active material, Li and O are extracted from the first positive electrode active material and move to the adjacent second positive electrode active material in order to bring the Ni valence close to stable trivalence. Since the structure of the first positive electrode active material in which Li and O are deficient becomes unstable, a NiO phase is generated. Such formation of NiO is a peculiar reaction that can occur only when the first precursor oxide, the second precursor oxide, and the Li source, which have a similar ratio of Ni (within a range of ± 3%), are calcined together. According to the mechanism inferred as described above, the NiO phase is mainly formed in the first positive electrode active material, but it is also considered that a reaction other than the above mechanism occurs, and it is also considered that the NiO phase may be formed in the second positive electrode active material.

Examples of the conductive agent contained in the positive electrode mixture layer include carbon materials such as carbon black, acetylene black, Ketjenblack, and graphite. These conductive agents may be used alone or in combination of two or more thereof. A content of the conductive agent in the positive electrode mixture layer is, for example, preferably greater than or equal to 0.5 mass% and less than or equal to 4 mass%, and more preferably greater than or equal to 0.5 mass% and less than or equal to 1.5 mass%.

Examples of the binding agent contained in the positive electrode mixture layer include a fluororesin such as polytetrafluoroethylene (PTFE) or polyvinylidene fluoride (PVdF), polyacrylonitrile (PAN), a polyimide-based resin, an acrylic resin, a polyolefin-based resin, styrene-butadiene rubber (SBR), carboxymethyl cellulose (CMC) or a salt thereof, polyacrylic acid (PAA) or a salt thereof (PAA-Na, PAA-K, and the like, or a partially neutralized salt may be used), polyethylene oxide (PEO), and polyvinyl alcohol (PVA). These conductive agents may be used alone or in combination of two or more thereof. A content of the binding agent in the positive electrode mixture layer is, for example, preferably greater than or equal to 0.5 mass% and less than or equal to 4 mass%, and more preferably greater than or equal to 0.5 mass% and less than or equal to 1.5 mass%.

### [Negative Electrode]

The negative electrode 12 includes, for example, a negative electrode current collector and a negative electrode mixture layer formed on the current collector. As the negative electrode current collector, a foil of a metal stable in a potential range of the negative electrode, such as copper, a film in which the metal is disposed on a surface layer, or the like can be used. The negative electrode mixture layer contains, for example, a negative electrode active material, a binding agent, and the like. The negative electrode can be produced, for example, by preparing a negative electrode mixture slurry containing a negative electrode active material, a binding agent, and the like, applying the negative electrode mixture slurry onto a negative electrode current collector, drying a coating film, and then rolling the coating film.

The negative electrode active material is not particularly limited as long as it is a material capable of occluding and releasing lithium ions, and examples thereof include metal lithium, lithium alloys such as a lithium-aluminum alloy, a lithium-lead alloy, a lithium-silicon alloy, and a lithium-tin alloy, carbon materials such as graphite, coke, and organic substance fired bodies, and metal oxides such as SnO₂, SnO, and TiO₂. These may be used singly or in combination of greater than or equal to two kinds thereof.

Examples of the binding agent contained in the negative electrode mixture layer include a fluorine-based resin, PAN, a polyimide-based resin, an acrylic resin, a polyolefin-based resin, SBR, CMC or a salt thereof, PAA or a salt thereof, PEO, and PVA as in the case of the positive electrode. It is noted that the negative electrode mixture layer may contain a conductive agent as in the case of the positive electrode.

### [Separator]

As the separator 13, for example, a porous sheet having an ion permeation property and an insulation property is used. Specific examples of the porous sheet include a fine porous thin film, a woven fabric, and a non-woven fabric. The separator 13 is formed of, for example, a polyolefin such as polyethylene or polypropylene, or cellulose. The separator 13 may be a laminate including a cellulose fiber layer and a thermoplastic resin fiber layer formed of a polyolefin or the like. In addition, the separator 13 may be a multi-layer separator including a polyethylene layer and a polypropylene layer, and may have a surface layer formed of an aramid resin or a surface layer including an inorganic filler.

### EXAMPLES

Hereinafter, the present disclosure will be further described with reference to Examples. However, the present disclosure is not limited to these Examples.

### <Example 1>

### [Synthesis of Positive Electrode Active Material]

A composite oxide represented by Ni_{0.90}Co_{0.05}Al_{0.05}O₂ as a first precursor oxide, a composite oxide represented by Ni_{0.90}Al_{0.05}Mn_{0.05}O₂ as a second precursor oxide, and lithium hydroxide were mixed at a molar ratio of 1:0.05:1.05. The mixture thereof was fired at 720°C for 20 hours under an oxygen stream so as to obtain a mixture of a lithium-containing composite oxide derived from the first precursor oxide (first positive electrode active material) and a lithium-containing composite oxide derived from the second precursor oxide (second positive electrode active material).

The obtained mixture was subjected to X-ray diffraction measurement, and a peak of NiO as a divalent oxide was observed. The mass ratio of NiO in the mixture was calculated from the peak intensity and half width of a (104) plane of the mixture and a (200) plane of NiO obtained by X-ray diffraction measurement to be 0.58%.

### [Manufacture of Positive Electrode]

The above mixture, acetylene black, and polyvinylidene fluoride were mixed at a mass ratio of 100:1:1, and an appropriate amount of N-methyl-2-pyrrolidone (NMP) was added to prepare a positive electrode mixture slurry. The slurry was applied onto both surfaces of a positive electrode current collector formed of an aluminum foil, a coating film was dried, and then the coating film was rolled by a rolling roller, thereby manufacturing a positive electrode in which a positive electrode mixture layer was formed on both surfaces of the positive electrode current collector.

### [Manufacture of Negative Electrode]

Artificial graphite, CMC, and SBR were mixed at a mass ratio of 100:1:1, and then an appropriate amount of water was added to prepare a negative electrode mixture slurry. The slurry was applied onto both surfaces of a negative electrode current collector formed of a copper foil, a coating film was dried, and then the coating film was rolled by a rolling roller, thereby manufacturing a negative electrode in which a negative electrode mixture layer was formed on both surfaces of the negative electrode current collector.

### [Preparation of Non-Aqueous Electrolyte]

A non-aqueous electrolyte was obtained by dissolving LiPF₆ at a concentration of 1.2 mol/L in a mixed solvent obtained by mixing ethylene carbonate (EC), methylethyl carbonate (MEC), and dimethyl carbonate at a volume ratio of 3:3:4.

### [Manufacture of Non-Aqueous Electrolyte Secondary Battery]

A positive electrode lead was attached to the manufactured positive electrode, and a negative electrode lead was attached to the manufactured negative electrode. A separator was disposed between the two electrodes and are spirally wound to produce a winding-type electrode assembly. The electrode assembly was inserted into a case body, the lead on the negative electrode side was welded to the bottom of a case body, and the lead on the positive electrode side was welded to a sealing assembly. The non-aqueous electrolyte was injected into the case body, and then an end part of an opening of the case body was caulked with the sealing assembly via a gasket. This was used as a non-aqueous electrolyte secondary battery.

### <Example 2>

A mixture was prepared in the same manner as in Example 1, except that a composite oxide represented by Ni_{0.90}Co_{0.05}Al_{0.05}O₂ as the first precursor oxide, a composite oxide represented by Ni_{0.90}Al_{0.05}Mn_{0.05}O₂ as the second precursor oxide, and lithium hydroxide were mixed at a molar ratio of 1:0.02: 1.02. Using this mixture, the non-aqueous electrolyte secondary battery was produced in the same manner as in Example 1.

As a result of performing X-ray diffraction measurement on the mixture obtained in Example 2, the peak of NiO was observed, and the mass ratio of NiO in the mixture was 0.51%.

### <Example 3>

A mixture was prepared in the same manner as in Example 1, except that a composite oxide represented by Ni_{0.90}Mn_{0.10}O₂ was used as the second precursor oxide. Using this mixture, the non-aqueous electrolyte secondary battery was produced in the same manner as in Example 1.

As a result of performing X-ray diffraction measurement on the mixture obtained in Example 3, the peak of NiO was observed, and the mass ratio of NiO in the mixture was 0.61%.

### <Example 4>

A mixture was prepared in the same manner as in Example 1, except that a composite oxide represented by Ni_{0.88}Al_{0.04}Mn_{0.04}O₂ was used as the second precursor oxide. Using this mixture, the non-aqueous electrolyte secondary battery was produced in the same manner as in Example 1.

As a result of performing X-ray diffraction measurement on the mixture obtained in Example 4, the peak of NiO was observed, and the mass ratio of NiO in the mixture was 0.57%.

### <Example 5>

A mixture was prepared in the same manner as in Example 1, except that a composite oxide represented by Ni_{0.92}Al_{0.03}Mn_{0.03}O₂ was used as the second precursor oxide. Using this mixture, the non-aqueous electrolyte secondary battery was produced in the same manner as in Example 1.

As a result of performing X-ray diffraction measurement on the mixture obtained in Example 5, the peak of NiO was observed, and the mass ratio of NiO in the mixture was 0.58%.

### <Comparative Example 1>

A mixture was prepared in the same manner as in Example 1, except that the second precursor oxide was not used. Using this mixture, the non-aqueous electrolyte secondary battery was produced in the same manner as in Example 1.

As a result of performing X-ray diffraction measurement on the mixture obtained in Comparative Example 1, the peak of NiO was not observed.

### <Comparative Example 2>

A mixture was prepared in the same manner as in Example 1, except that a composite oxide represented by Ni_{0.82}Al_{0.08}Mn_{0.10}O₂ was used as the second precursor oxide. Using this mixture, the non-aqueous electrolyte secondary battery was produced in the same manner as in Example 1.

As a result of performing X-ray diffraction measurement on the mixture obtained in Comparative Example 2, the peak of NiO was not observed.

### <Comparative Example 3>

A mixture was prepared in the same manner as in Example 1, except that a composite oxide represented by Ni_{0.95}Al_{0.02}Mn_{0.03}O₂ was used as the second precursor oxide. Using this mixture, the non-aqueous electrolyte secondary battery was produced in the same manner as in Example 1.

As a result of performing X-ray diffraction measurement on the mixture obtained in Comparative Example 3, the peak of NiO was not observed.

### [Charging/discharging test]

Each of the non-aqueous electrolyte secondary batteries of the respective Examples and the respective Comparative Examples was subjected to constant current charging at a constant current of 0.2 C under a temperature environment of 25°C until the battery voltage reached 4.2 V, and constant voltage charging at 4.2 V until the current value reached 0.02 C. Then, the battery was discharged at a constant current of 0.2 C until the battery voltage reached 2.5 V The discharging capacity at this time was defined as an initial discharging capacity. Then, a charging-and-discharging cycle was performed for 500 cycles, and a capacity retention rate was calculated by the following formula. Capacity retention rate (%) = (discharging capacity at 500 cycles/initial discharging capacity) ×100

Table 1 summarizes the results of the initial discharging capacity and the capacity retention rate in each Example and each Comparative Example. However, these results are expressed as relative values of the results of other Examples and Comparative Examples with the result of Comparative Example 1 as a reference (100).

**[Table 1]**

| | First positive electrode active material composition (mol%) | | | Second positive electrode active material composition (mol%) | | | Mixture ratio of positive electrode active material first: second | NiO mass ratio (%) | Initial discharging capacity | Capacity retention rate |
|---|---|---|---|---|---|---|---|---|---|---|
| | Ni | Co | Al | Ni | Mn | Al | | | | |
| Example 1 | 90 | 5 | 5 | 90 | 5 | 5 | 100:5 | 0.58 | 103 | 103 |
| Example 2 | 90 | 5 | 5 | 90 | 5 | 5 | 100:2 | 0.51 | 102 | 101 |
| Example 3 | 90 | 5 | 5 | 90 | 10 | - | 100:5 | 0.61 | 100 | 102 |
| Example 4 | 90 | 5 | 5 | 88 | 4 | 4 | 100:5 | 0.57 | 103 | 104 |
| Example 5 | 90 | 5 | 5 | 92 | 3 | 3 | 100:5 | 0.58 | 103 | 101 |
| Comparative Example 1 | 90 | 5 | 5 | - | - | - | 100:0 | | 100 | 100 |
| Comparative Example 2 | 90 | 5 | 5 | 82 | 10 | 8 | 100:5 | - | 100 | 97 |
| Comparative Example 3 | 90 | 5 | 5 | 95 | 3 | 2 | 100:5 | - | 100 | 98 |

In all of Examples 1 to 5, the initial discharging capacity was greater than or equal to that of Comparative Example 1, and the capacity retention rate showed a high value. Therefore, by using, as a positive electrode active material, a mixture of the first positive electrode active material in which the ratio (A1) of the number of moles of Ni to the total number of moles of metal elements excluding Li is greater than or equal to 80%, and the ratio (A2) of the number of moles of Mn to the total number of moles of metal elements excluding Li is less than or equal to 1%, and the second positive electrode active material in which the ratio (B 1) of the number of moles of Ni to the total number of moles of metal elements excluding Li is in the range of ±3% of the ratio (A1), and the ratio (B2) of the number of moles of Mn to the total number of moles of metal elements excluding Li is greater than or equal to 3%, in which the peak of NiO is observed in X-ray diffraction measurement, a high discharging capacity is shown similarly to Comparative Example 1, and it is possible to suppress deterioration in charging-and-discharging cycle characteristics as compared with Comparative Example 1.

In addition, in Examples, a mixture of the first positive electrode active material in which Co is used and the second positive electrode active material in which Co is not used is used as a positive electrode active material. That is, since the use of the positive electrode active material containing Co can be reduced as much as the positive electrode active material not containing Co is used, Examples are superior to Comparative Example 1 also in terms of material costs.

### REFERENCE SIGNS LIST

- 10: Secondary battery
- 11: Positive electrode
- 12: Negative electrode
- 13: Separator
- 14: Electrode assembly
- 15: Battery case
- 16: Case body
- 17: Sealing assembly
- 18, 19: Insulating plate
- 20: Positive electrode lead
- 21: Negative electrode lead
- 22: Projecting portion
- 23: Filter
- 24: Lower vent member
- 25: Insulating member
- 26: Upper vent member
- 27: Cap
- 28: Gasket

## Claims

1. A positive electrode active material for a non-aqueous electrolyte secondary battery, the positive electrode active material comprising a mixture of a first positive electrode active material and a second positive electrode active material, wherein:
the first positive electrode active material is a Ni-containing lithium composite oxide, wherein a ratio (A1) of the number of moles of Ni to the total number of moles of metal elements excluding Li is greater than or equal to 80%, and a ratio (A2) of the number of moles of Mn to the total number of moles of the metal elements excluding Li is less than or equal to 1%,
the second positive electrode active material is the Ni-containing lithium composite oxide, wherein a ratio (B 1) of the number of moles of Ni to the total number of moles of the metal elements excluding Li is in a range of ±3% of the ratio (A1), and a ratio (B2) of the number of moles of Mn to the total number of moles of the metal elements excluding Li is greater than or equal to 3%, and
a peak of NiO is observed in X-ray diffraction measurement of the mixture.

2. The positive electrode active material for a non-aqueous electrolyte secondary battery according to claim 1, wherein:
a ratio (A3) of the number of moles of Co to the total number of moles of the metal elements excluding Li exceeds 1% in the first positive electrode active material, and
a ratio (B3) of the number of moles of Co to the total number of moles of the metal elements excluding Li is less than or equal to 1% in the second positive electrode active material.

3. The positive electrode active material for a non-aqueous electrolyte secondary battery according to claim 1 or 2, wherein a content of the second positive electrode active material is in a range which is greater than or equal to 1 mass% and less than or equal to 10 mass% with respect to a mass of the first positive electrode active material.

4. The positive electrode active material for a non-aqueous electrolyte secondary battery according to claim 3, wherein the content of the second positive electrode active material is in a range which is greater than or equal to 2 mass% and less than or equal to 5 mass% with respect to the mass of the first positive electrode active material.

5. A non-aqueous electrolyte secondary battery comprising a positive electrode, a negative electrode, and a non-aqueous electrolyte,
wherein the positive electrode contains the positive electrode active material for the non-aqueous electrolyte secondary battery according to any one of claims 1 to 4.
